Europäisches Patentamt

European Patent Office

Office européen des brevets

(11) Veröffentlichungsnummer: **0 172 395**

**A1**

(12) **EUROPÄISCHE PATENTANMELDUNG**

(21) Anmeldenummer: 85108755.1

(22) Anmeldetag: 12.07.85

(51) Int. Cl.⁴: **A 47 G 21/18**
**B 29 D 23/00**

(30) Priorität: 27.07.84 DE 3427732

(43) Veröffentlichungstag der Anmeldung:
26.02.86 Patentblatt 86/9

(84) Benannte Vertragsstaaten:
AT BE CH DE FR GB IT LI NL SE

(71) Anmelder: Overbeck GmbH & Co.
Duckwitzstrasse 39
D-2800 Bremen 1(DE)

(72) Erfinder: Becker, Gert
Gutsmeierweg 30
D-2820 Bremen 70(DE)

(74) Vertreter: Bolte, Erich, Dipl.-Ing. et al,
Hollerallee 73
D-2800 Bremen(DE)

(54) Längenveränderbarer Trinkhalm sowie Verfahren und Vorrichtung zum Herstellen desselben.

(57) Ein längenveränderlicher Trinkhalm (30) besteht aus zwei teleskopartig gegeneinander verschiebbaren Trinkhalmabschnitten, nämlich einem Außenhalm (31) und einem Innenhalm (32). Diese sind in mindestens zwei Relativstellungen zueinander fixierbar, insbesondere in der Gebrauchsstellung, wenn Außenhalm (31) und Innenhalm (32) auseinandergezogen sind. Die Fixierung erfolgt durch eine im Außenhalm (31) mit Abstand von einem Ende desselben angebrachten Anschlagsicke (34), an der innen eine am äußersten Ende des Innenhalms (31) angebrachte Randverdickung (33) zur Anlage kommt.

Fig. 2

EP 0 172 395 A1

**0172395**

MEISSNER & BOLTE, Hollerallee 73, D-2800 Bremen 1

Hans Meissner · Dipl.-Ing. (bis 1980)
Erich Bolte · Dipl.-Ing.
Dr. Eugen Popp · Dipl.-Wirtsch.-Ing.*
Wolf E. Sajda · Dipl.-Phys.*
Dr. Tam v. Bülow · Dipl.-Wirtsch.-Ing.*
Dr. Ulrich Hrabal · Dipl.-Chem.*

BÜRO/OFFICE BREMEN
Hollerallee 73
D-2800 Bremen 1

Telefon: (0421) 342019
Telegramme: PATMEIS Bremen
Telex: 246157 meibo d

Anmelder:

Overbeck GmbH & Co.
Duckwitzstraße 39

2800 Bremen 1

| Ihr Zeichen<br>Your ref | Unser Zeichen<br>Our ref | OVE-34<br>Bitte angeben/please quote | Datum<br>Date 28. Juni 1985 / 9812 |
|---|---|---|---|

## Längenveränderbarer Trinkhalm sowie Verfahren und Vorrichtung zum Herstellen desselben

### B e s c h r e i b u n g

Die Erfindung bezieht sich auf einen längenveränderbaren Trinkhalm mit mindestens zwei teleskopartig gegeneinander verschiebbaren Trinkhalmabschnitten. Weiterhin bezieht sich die Erfindung auf ein Verfahren und eine Vorrichtung zum Herstellen derartiger Trinkhalme.

Die auf dem Markt anzutreffenden Trinkhalme aus Kunststoff sind weit überwiegend einstückig ausgebildet. Für die Verpackung derartiger Trinkhalme und die eventuelle Anbringung derselben an Getränkeverpackungen ist eine verhältnismäßig geringe Länge der Trinkhalme wünschenswert. Für die Benutzung derselben sind hingegen bestimmte Mindestlängen wünschenswert bzw. erforderlich.

Die Erfindung bezieht sich auf einen aus vorzugsweise zwei teleskopartig ineinander verschiebbaren Trinkhalmabschnitten, die im zusammengeschobenen Zustand eine begrenzte Länge des Trinkhalms gewährleisten, für den Gebrauch desselben aber durch Auseinanderziehen der beiden Trinkhalmabschnitte eine ausreichende Gesamtlänge ermöglichen.

Die der Erfindung zugrunde liegende Aufgabe besteht darin, die (Teleskop-)Trinkhalme so auszubilden, daß sie wirtschaftlich in großen Stückzahlen gefertigt sowie leicht und zuverlässig zu handhaben sind. Entsprechend sollen Verfahren und Vorrichtung ausgebildet sein.

Zur Lösung dieser Aufgabe ist der erfindungsgemäße Trinkhalm dadurch gekennzeichnet, daß die beiden Trinkhalmabschnitte ineinandersteckbar sind und mindestens in einer Relativlage zueinander durch formschlüssigen Eingriff von radial gerichteten Vorsprüngen und Vertiefungen gegeneinander verriegelbar sind.

Die Vertiefungen bzw. Vorsprünge sind erfindungsgemäß als Sicken ausgebildet, die ringförmig nach innen oder außen ragend in die aus thermisch verformbaren Kunststoff bestehenden Trinkhalme eingeformt sind.

Gemäß einem bevorzugten Ausführungsbeispiel der Erfindung ist der (kürzere) äußere Trinkhalmabschnitt (Außenhalm) mit einer nach innen geformten Anschlagsicke mit Abstand von einem Ende versehen. Der andere Trinkhalmabschnitt, nämlich der Innenhalm, ist als Gegenanschlag an seinem einen äußeren Ende mit einer durch thermische Aufweitung des Innenhalm gebildeten, nach außen gerichteten Randverdickung versehen. Diese kommt bei ausgezogenem Trinkhalm an der wulstartig nach innen ragenden Anschlagsicke zur Anlage.

Gemäß einem weiteren Merkmal der Erfindung sind das Ende des Innentrinkhalms, also das äußere, in die Getränkeverpackung einzuführende Ende abgeschrägt, ebenso das der Packung zugekehrte Ende des Außenhalms. Durch das letztgenannte Merkmal wird das Einführen des Teleskop-Trinkhalms mit dem eine Querschnittserweiterung darstellenden Außenhalm in die Getränkeverpackung erleichtert.

Der erfindungsgemäße Trinkhalm ist in zusammengeschobenem Zustand günstig zu handhaben, nämlich zu lagern und zu verpacken, die Trinkhalmabschnitte können leicht auseinandergezogen werden. Bei voller Länge des Trinkhalms sind die Trinkhalmabschnitte stabil gegeneinander verankert.

Bei dem erfindungsgemäßen Verfahren zum Herstellen derartiger Teleskop-Trinkhalme werden die Trinkhalmabschnitte (Außenhalm und Innenhalm) zunächst ineinander geschoben und sodann mit den erforderlichen Sicken, Randverdickungen etc. versehen. Eine Besonderheit besteht darin, daß Trinkhalm-Einheiten von doppelter Länge gefertigt und (vor dem Anbringen der Sicken und Randverdickungen) durch einen mittigen schrägen Trennschnitt aufgeteilt werden.

Die erfindungsgemäße Vorrichtung arbeitet mit zwei separaten Extrudern zum Extrudieren von Halmsträngen unterschiedlichen Durchmessers. Von diesen werden Innen- und Außenhalm abgetrennt, insbesondere in doppelter Länge und im Bereich einer Vereinigungstrommel mit Aufnahmen bzw. Nuten zur Aufnahme je einer Trinkhalmeinheit zusammengeführt mit Hilfe einer jeder Halmaufnahme zugeordneten Fügehülse. Danach werden an den beiden Enden der Trinhalmeinheit durch Strahlungswärme die Randverdickungen angebracht. Nach dem anschließenden mittigen Durchtrennen werden die Sicken durch Drehen der Trinkhalme um die eigene Längsachse während des Transports durch eine Fertigungstrommel relativ zu einer Abrollbahn eingeformt.

Ausführungsbeispiele der erfindungsgemäßen Trinkhalme sowie der Vorrichtung zum Herstellen derselben werden nachfolgend anhand der Zeichnungen näher erläutert. Es zeigt:

Fig. 1    einen (Teleskop-)Trinkhalm in zusammengeschobener Stellung von Trinkhalmabschnitten im Längsschnitt,

Fig. 2    den Trinkhalm gemäß Fig. 1 bei auseinandergezogener Stellung der Trinkhalmabschnitte,

Fig. 3    eine Vorrichtung zum Herstellen von Trinkhalmen gemäß Fig. 1 und 2 in stark vereinfachter Grundrißdarstellung,

Fig. 4    eine ebenfalls stark vereinfachte Stirnansicht der Vorrichtung gemäß Fig. 3,

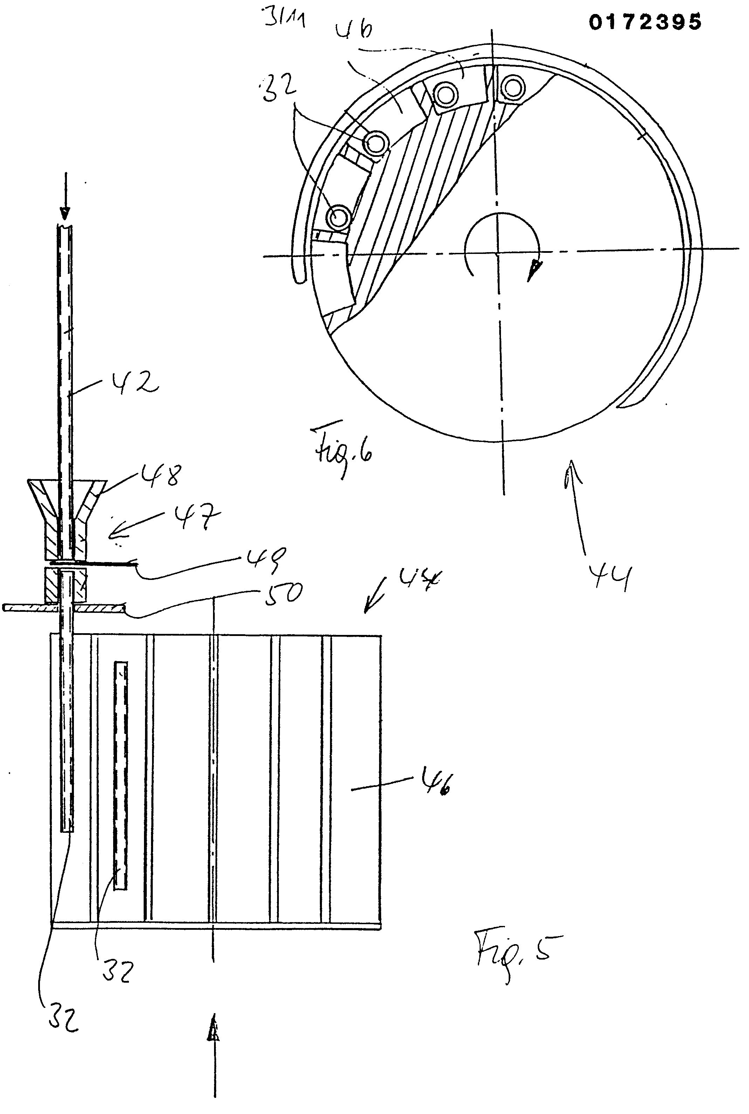

Fig. 5    eine Einzelheit der Vorrichtung für die Herstellung eines Trinkhalmabschnitts (Innenhalm) im Grundriß bzw. Horizontalschnitt bei vergrößertem Maßstab,

Fig. 6    ein Detail zu Fig. 5, nämlich eine Halmwalze, in Vorderansicht bzw. im Vertikalschnitt,

Fig. 7    eine Einzelheit analog zu Fig. 5 für die Herstellung des Außenhalms,

Fig. 8    ein Detail der Fig. 7 analog zu Fig. 6,

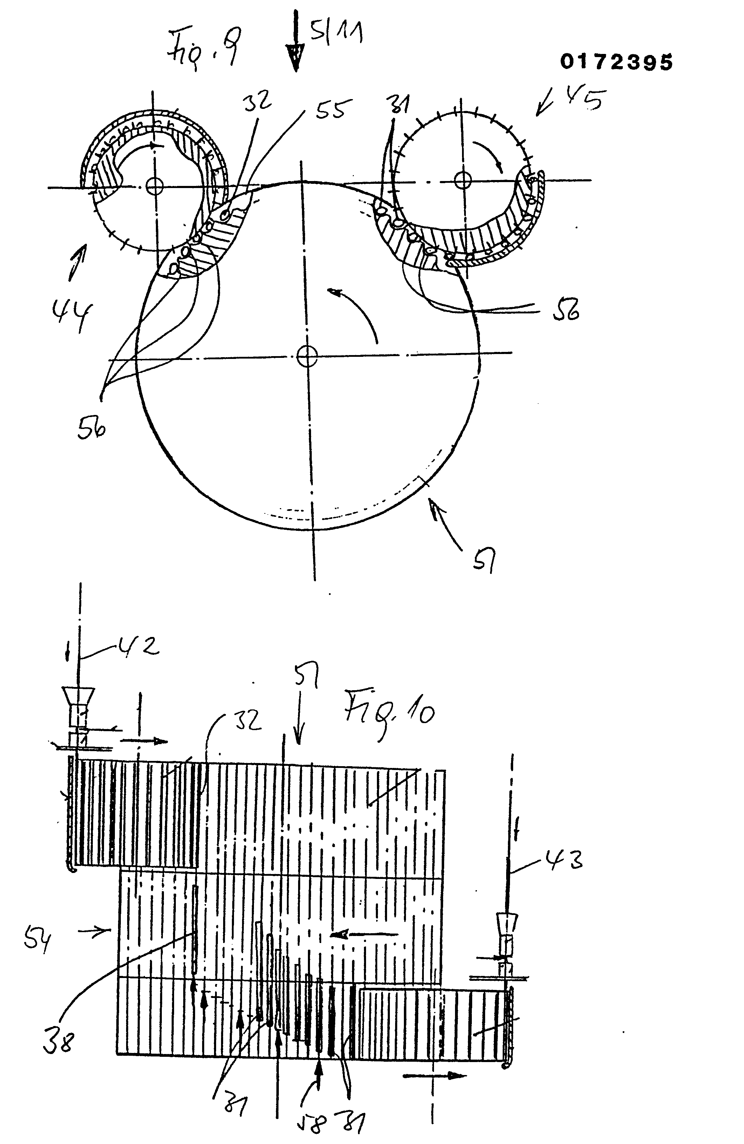

Fig. 9    eine weitere Einzelheit der Vorrichtung in Stirnansicht bzw. im Vertikalschnitt, nämlich eine Vereinigungstrommel, in Stirnansicht,

Fig. 10   die Vereinigungstrommel gemäß Fig. 9 im Grundriß,

Fig. 11   eine Einzelheit der Vereinigungstrommel, nämlich der Bereich des Zusammenfügens der Halmabschnitte, ebenfalls im Grundriß bzw. in Seitenansicht,

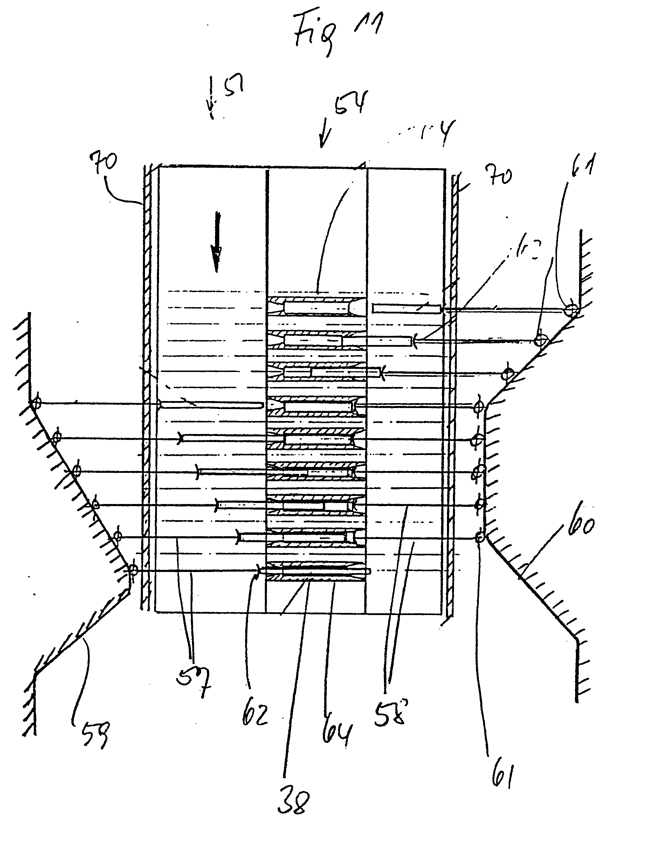

Fig. 12
bis
Fig. 14    Einzelheiten über die Vereinigung (Ineinanderschieben) der Halmabschnitte im Schnitt,

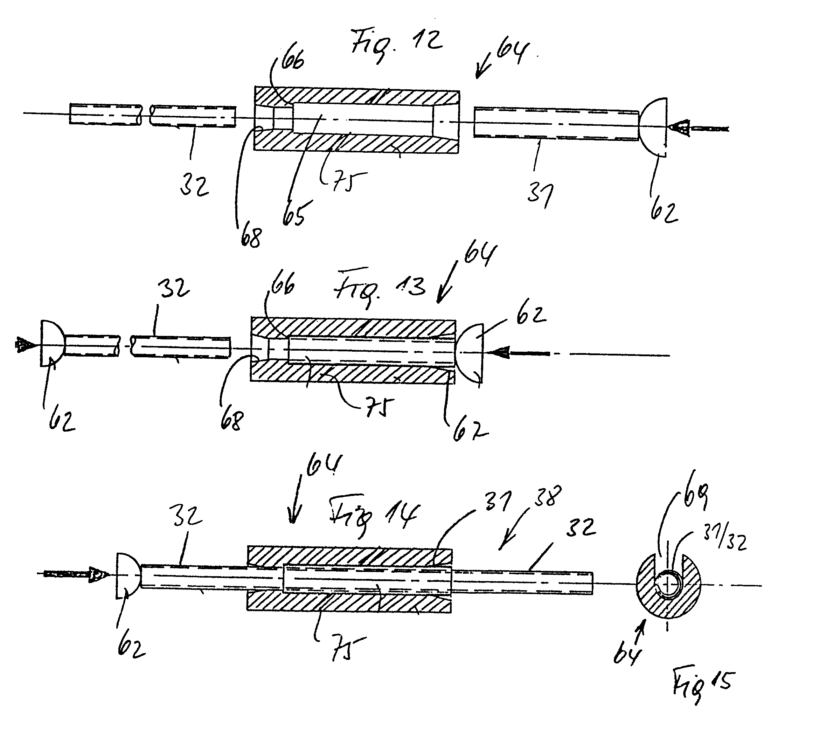

Fig. 15    eine Fügehülse der Fig. 12 bis 14 im Vertikalschnitt,

Fig. 16
und    Phasen beim Anbringen von Randverdickungen an
den Enden von Trinkhalmeinheiten,
Fig. 17

Fig. 18
und    Einrichtungen zum Verschieben von Trinkhalmen
Fig. 19    auf einer Formwalze im Schnitt,
Fig. 20
und

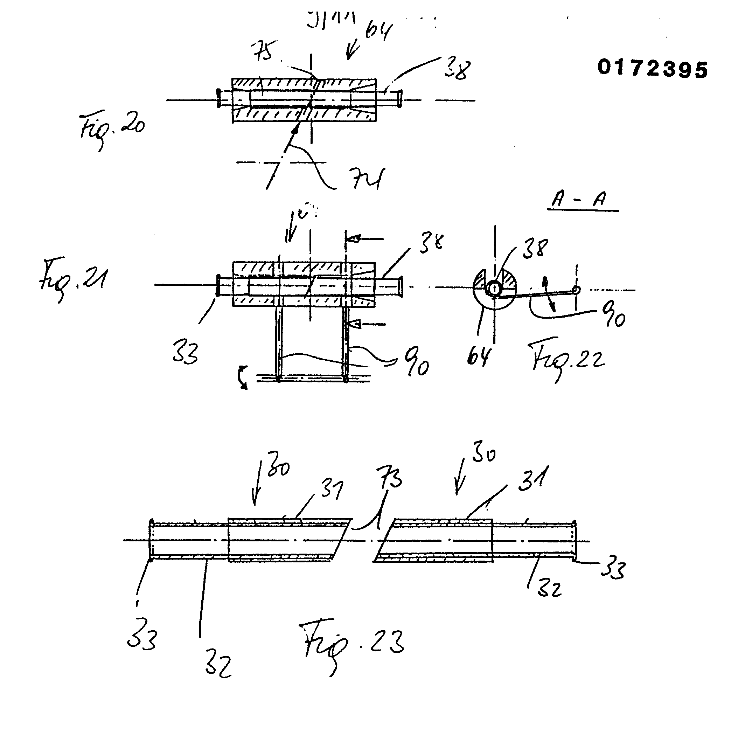

Fig. 21    Phasen beim Herstellen der einzelnen Trinkhalme
aus Trinkhalmeinheiten,

Fig. 22    eine Einzelheit im Bereich der Fügehülse, nämlich Ausheber im Querschnitt,

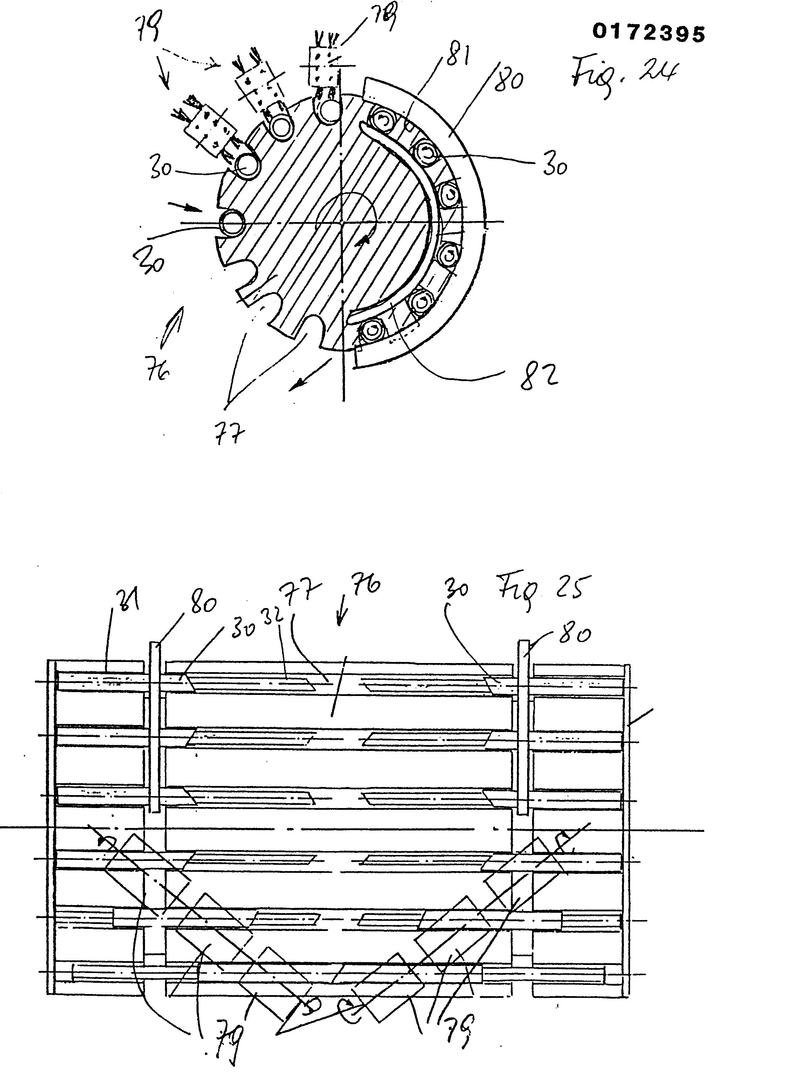

Fig. 23    die aus einer Trinkhalmeinheit gefertigten
Trinkhalme im Längsschnitt,

Fig. 24    eine Fertigungstrommel zum Anbringen von Sicken
etc. im schematischen Querschnitt,

Fig. 25    die Fertigungstrommel gemäß Fig. 24 in Ansicht
bzw. Draufsicht,

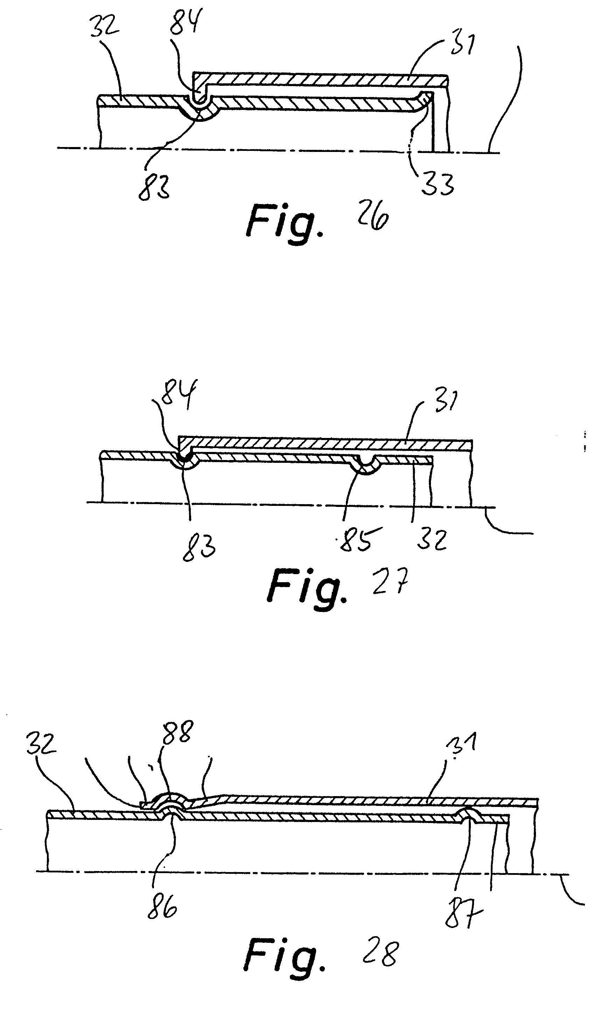

Fig. 26    eine Einzelheit eines anderen Ausführungsbeispiels eines Trinkhalms im Halb-Längsschnitt,

Fig. 27    eine weitere Ausführungsform eines Trinkhalms
in einer Darstellung entsprend Fig. 26,

Fig. 28 eine vierte Ausführungsform eines Trinkhalms, ebenfalls im Längsschnitt.

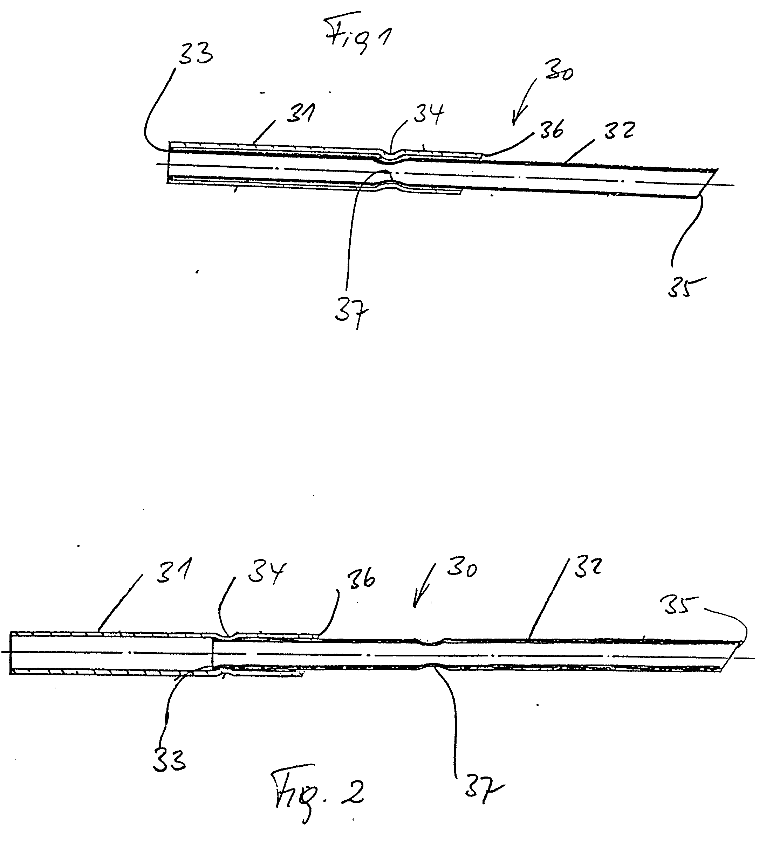

Die in den Zeichnungen dargestellten Ausführungsbeispiele von (Teleskop-)Trinkhalmen 30 bestehen aus zwei gegeneinander verschiebbaren Trinkhalmabschnitten, nämlich einem Außenhalm 31 und einem Innenhalm 32. Bei dem besonders vorteilhaften Ausführungsbeispiel der Fig. 1 und 2 ist der mit kleinerem Durchmesser ausgebildete Innenhalm 32 deutlich länger als der Außenhalm 31. Die Durchmesser sind so aufeinander abgestimmt, daß der Außendurchmesser des Innenhalms etwa dem Innendurchmesser des Außenhalms 31 entspricht.

In der ausgezogenen Stellung (Fig. 2) sind die Trinkhalmabschnitte, also Außenhalm 31 und Innenhalm 32, gegeneinander verankert. Zu diesem Zweck ist der Innenhalm an einem Ende mit einer in Radialrichtung nach außen gerichteten Querschnittserweiterung versehen, nämlich mit einer am äußersten Ende angeordneten Randverdickung 33. Diese wirkt zusammen mit einer Querschnittsverengung des Außenhalms, nämlich einer ringsherum laufenden, nach innen eingeformten Anschlagsicke 34. Diese ist mit Abstand von einem dem zu leerenden Trinkgefäß zugekehrten Ende angeordnet. Die durch (thermische) Aufweitung des Endes des Innenhalms entstandene, bogenförmige Randverdickung liegt dabei unter einer gewissen Spannung der Anschlagsicke an, so daß die Trinkhalmabschnitte in beiden Richtungen eine gewisse Fixierung gegeneinander erfahren.

Die dem Trinkgefäß zugekehrten Enden sowohl des Innenhalms als auch des Außenhalms sind mit einer Abschrägung 35 bzw. 36 ausgebildet. Diese ermöglicht das Einführen der betreffenden Enden, also auch des Außenhalms 31, in eine Öffnung des Trinkgefäßes.

Bei dem vorliegend dargestellten Ausführungsbeispiel ist auch der Innenhalm mit einer Sicke versehen, nämlich einer Haltesicke 37. Diese deckt sich in zusammengeschobener Stellung des Trinkhalms 30 mit der Anschlagsicke 34 des Außenhalms 31, so daß auch die für die Verpackung bzw. Lagerung geeignete Ausgangsstellung gemäß Fig. 1 durch formschlüssigen Eingriff von Vorsprüngen und Vertiefungen der Trinkhalmabschnitte gesichert ist.

Der in vorstehender Weise ausgebildete (Teleskop-) Trinkhalm wird aus einer Trinkhalmeinheit 38 durch mittigen Trennschnitt 39 gebildet. Die Trinkhalmeinheit 38 besteht demnach aus gegeneinander zentrierten Außenhalmen 31 und Innenhalmen 32 doppelter Länge. Der schräg geführte Trennschnitt 39 erzeugt demnach zwei einzelne Trinkhalme 30, jeweils mit den Abschrägungen 35 und 36 (Fig. 20 bis 23).

Bei der Herstellung der Trinkhalme 30 bzw. Trinkhalmeinheiten 38 wird gemäß vorliegendem Ausführungsbeispiel der Vorrichtung mit zwei gesonderten Extrudern 40 und 41 gearbeitet. Ein Extruder, im vorliegenden Fall der Extruder 40, dient zur Herstellung eines fortlaufend extrudierten Halmstranges 42 für den Innenhalm 32. Mit dem Extruder 41 wird ein Halmstrang 43 für den Außenhalm 31 extrudiert.

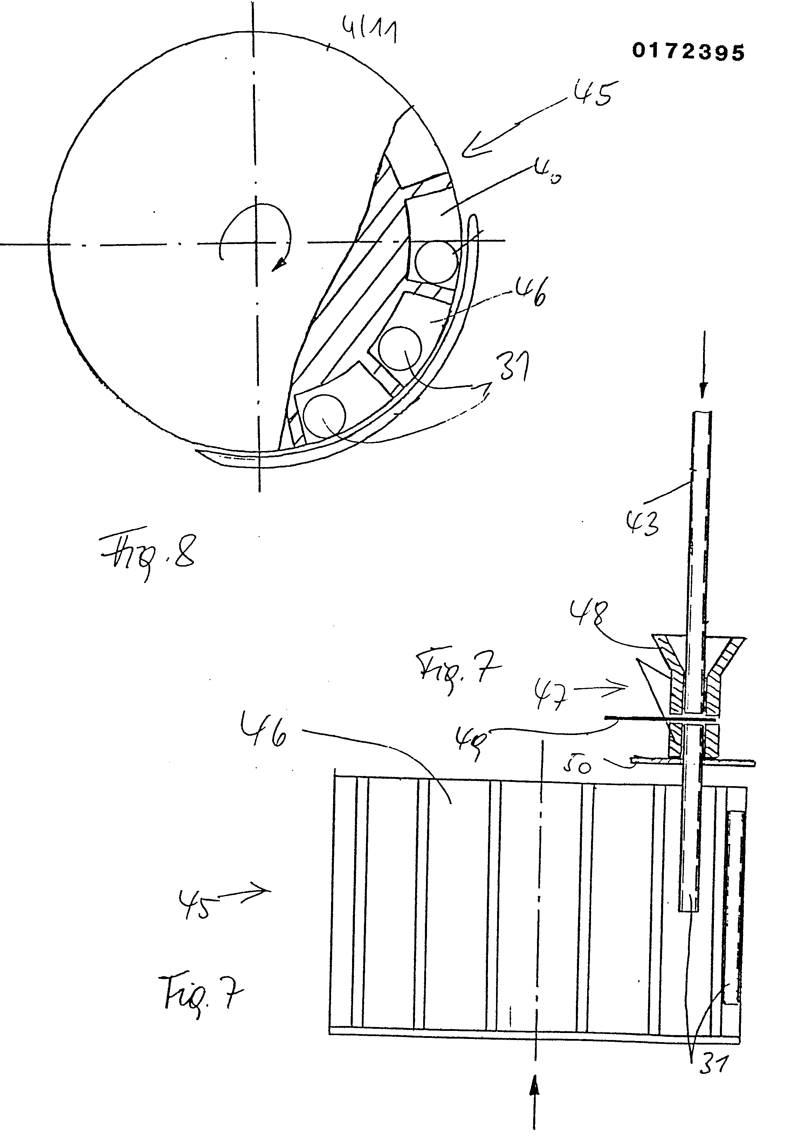

Die Halmstränge 42 und 43 werden in einzelne Trinkhalmabschnitte von doppelter Länge aufgeteilt. Zu diesem Zweck ist jedem Extruder 40, 41 eine umlaufende Halmwalze 44 bzw. 45 zugeordnet. Diese ist längs des Umfangs mit Aufnahmen, nämlich achsparallelen Taschen 46 je zur Aufnahme eines Trinkhalmabschnitts (Außenhalm 31, Innenhalm 32) versehen. Wie aus Fig. 6 und 8 ersichtlich, haben die Taschen 46 einen annähernd rechteckigen Querschnitt und sind in Umfangsrichtung von deutlich größerer Abmessung als ein Trinkhalmabschnitt. Diese können demnach in den Taschen beträchtliche Relativbewegungen in Umfangsrichtung der Halmwalze 44, 45 durchführen.

Den Halmwalzen 44, 45 sind Trennaggregate zum Abteilen der (doppelt langen) Außenhalme 31 bzw. Innenhalme 32 von den zugeordneten Halmsträngen vorgelagert. Der Halmstrang 42 bzw. 43 wird in einen Schneidzylinder 47 mit trichterförmigem Einlaufmundstück 48 geleitet. Der Schneidzylinder 47 ist in Längsrichtung geteilt. In einen Spalt tritt ein rotierendes Schneidmesser 49 ein. Auf der der Halmwalze 44 bzw. 45 zugekehrten Seite folgt auf den Schneidzylinder 47 ein mit Durchtrittsöffnung versehenes Prallblech 50. Dieses sichert die in die Taschen 46 mit hoher Geschwindigkeit eingetretenen Trinkhalmabschnitte 31, 32 gegen Wiederaustritt aufgrund von Rückprall. Die abgetrennten Trinkhalmabschnitte 31, 32 treten nämlich mit hoher Energie in die auf der dem Schneidzylinder 47 zugekehrten Seite offenen Taschen 46 ein und laufen gegen eine gegenüberliegend an der Halmwalze 44, 45 angeordnete Prallscheibe 63. Der Rückprall wird , wie dargelegt, durch das Prallblech 50 aufgefangen, so daß die Trinkhalmabschnitte 31, 32 in den Taschen 46 ordnungsgemäß positioniert werden. Die verhältnismäßig große Abmessung der Taschen 46 ermöglicht die Einführung der Trinkhalmabschnitte 31, 32 in diese bei kontinuierlich umlaufenden Halmwalzen 44, 45.

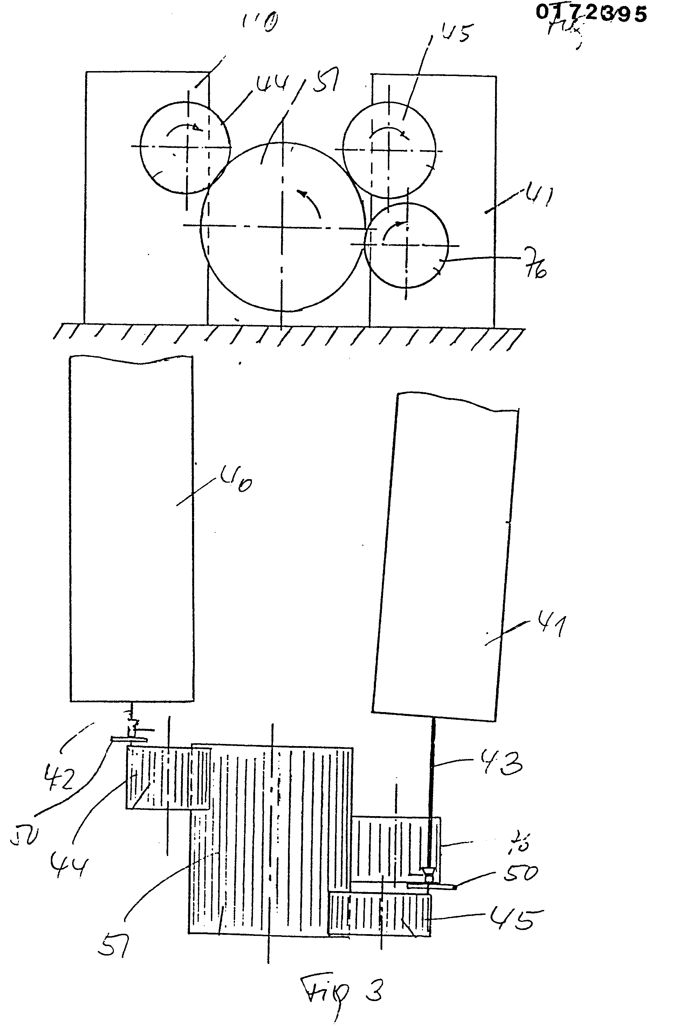

Die Halmwalzen 44, 45 dienen zur Weiterleitung und Übergabe der Trinkhalmabschnitte 31 und 32 an eine Vereinigungstrommel 51. Wie insbesondere aus Fig. 3 ersichtlich, sind die Halmwalzen 44 und 45 in Axialrichtung versetzt, nämlich mit deutlichem Abstand voneinander relativ zur Vereinigungstrommel 51 angeordnet. Dadurch werden die (längeren) Innenhalme 32 an dem einen Randbereich und die Außenhalme 31 am gegenüberliegenden Randbereich der Vereinigungstrommel 51, jeweils mit deutlichem axialen Abstand voneinander, zugeführt. Der Einschub der Halmabschnitte in die Halmwalzen 44, 45 erfolgt dabei jeweils in einem von der Übergabestelle an die Vereinigungstrommel 51 entfernt liegenden Bereich. Um die Trinkhalmabschnitte 31,32 während des Transports durch die Halmwalzen 44, 45 bis zur Übergabe an die Vereinigungstrommel 51 in den auf der radial außen liegenden Seite offenen Taschen 46 zu halten, sind die Halmwalzen 44, 45 längs eines dem Förderweg entsprechenden Teilumfangs mit einer feststehenden, kreisbogenförmigen Abdeckung 52, 53 versehen.

Die in Axialrichtung entsprechend bemessene Vereinigungstrommel 51 ist mit einem mittleren Vereinigungsbereich 54 ausgebildet. Hier werden die getrennt und mit Abstand voneinander aufgegebenen, jedoch gleichachsig liegenden Trinkhalmabschnitte, nämlich Außenhalm 31 und Innenhalm 32, durch axiales Gegeneinanderverschieben zusammengefügt, nämlich ineinander geschoben.

Außenhalm 31 und Innenhalm 32 finden Aufnahme in Halmmulden 56, die achsparallel am Umfang der Vereinigungstrommel 51 angeordnet sind und den Abmessungen von Außenhalm 31 und Innenhalm 32 im wesentlichen entsprechen. Gegen Herausfallen aus den Halmmulden 56 sind Außenhalm 31 und Innenhalm 32 durch eine ortsfeste äußere Abdeckung gesichert, die die Vereinigungstrommel 51 längs eines Teilbereichs des Umfangs umgibt. Durch die verhältnismäßig groß bemessenen Taschen 46 der Halmwalzen 44 und 45 ist eine präzise und störungsfreie Übergabe von Außenhalm 31 und Innenhalm 32 an die Halmmulden 56 der Vereinigungstrommel 51 möglich.

Zum Ineinanderschieben von Außenhalm 31 und Innenhalm 32 im Bereich der Vereinigungstrommel 51 sind jeder Halmaufnahme, nämlich Halmmulde 56, achsparallel verschiebbare Halmstößel 57 und 58 zugeordnet. Diese werden durch eine Steuerkurve 59, 60 hinsichtlich ihrer achsparallelen Bewegung und Relativstellung gesteuert. Die sich entlang des Umfangs der Vereinigungstrommel 51 zu beiden Seiten derselben erstreckenden Steuerkurve 59, 60 bewirken aufgrund ihrer unterschiedlichen Gestaltung entsprechend unterschiedliche Relativbewegungen der Außen- und Innenhalme 31, 32 entsprechend dem Vereinigungsvorgang. Die Halmstößel 57, 58 laufen dabei mit Stützrollen 61 infolge der Drehbewegung der Vereinigungstrommel 51 auf den unbeweglich angeordneten Steuerkurven 59, 60 ab. Die den Außen- und Innenhalmen 31, 32 zugekehrten Enden der Halmstößel 57 und 58 tragen abgerundete Stößelköpfe 62.

Im Vereinigungsbereich 54 ist die Vereinigungstrommel 51 in besonderer Weise gestaltet. Hier sind nämlich längs des Umfangs achsparallel liegende Fügehülsen 64 am Umfang angebracht, in deren Bereich die Trinkhalmabschnitte 31 und 32 ineinander geschoben werden.

Wie insbesondere aus Fig. 12 ff. ersichtlich, ist die Fügehülse 64 mit einem zylindrischen Innenraum 65 etwa in den Abmessungen des (doppelt langen) Außenhalms versehen. Dieser wird während des Fügeprozesses durch die zugeordneten Halmstößel 58 zuerst in die Fügehülse 64 eingestoßen bis zur Anlage an einer Anschlagwand 66. Auf der zum Einschub des Außenhalms 31 gegenüberliegenden Seite wird sodann durch die Halmstößel 57 der Innenhalm 32 in die Fügehülse 64 zentrisch eingeschoben und damit auch zugleich in den Außenhalm 31. Dieser wird dabei durch den zugeordneten Halmstößel 58 in seiner Position gehalten. Zum zentrischen Einführen vom Außenhalm 31 und Innenhalm 32 sind trichterförmige Einlaufführungen 67 für den Außenhalm 31 und 68 für den Innenhalm 32 an den einander gegenüberliegenden Enden der Fügehülse 64 vorgesehen.

Wie aus Fig. 15 ersichtlich, ist die Fügehülse im Querschnitt im wesentlichen U-förmig ausgebildet, nämlich auf ihre gesamte Länge oben bzw. radial außen offen unter Bildung eines Austrittsschlitzes 69.

Die Vereinigung der Trinkhalmabschnitte 31, 32 im Vereinigungsbereich 54 erfolgt während kontinuierlichen Umlaufs der Vereinigungstrommel 51. Die Steuerkurven 59, 60 sind dabei so ausgebildet bzw. angeordnet, daß Außenhalm 31 und Innenhalm 32 aufeinander folgend in die Fügehülsen 64 eingeführt werden, und zwar längs einer Teildrehung der Vereinigungstrommel 51. Die Trinkhalmabschnitte 31 und 32 sind in den Halmmulden 56 gegen Axialverschiebungen durch mitumlaufende Seitenführungen 70 gesichert, in denen auch die Halmstößel 57, 58 gelagert sind.

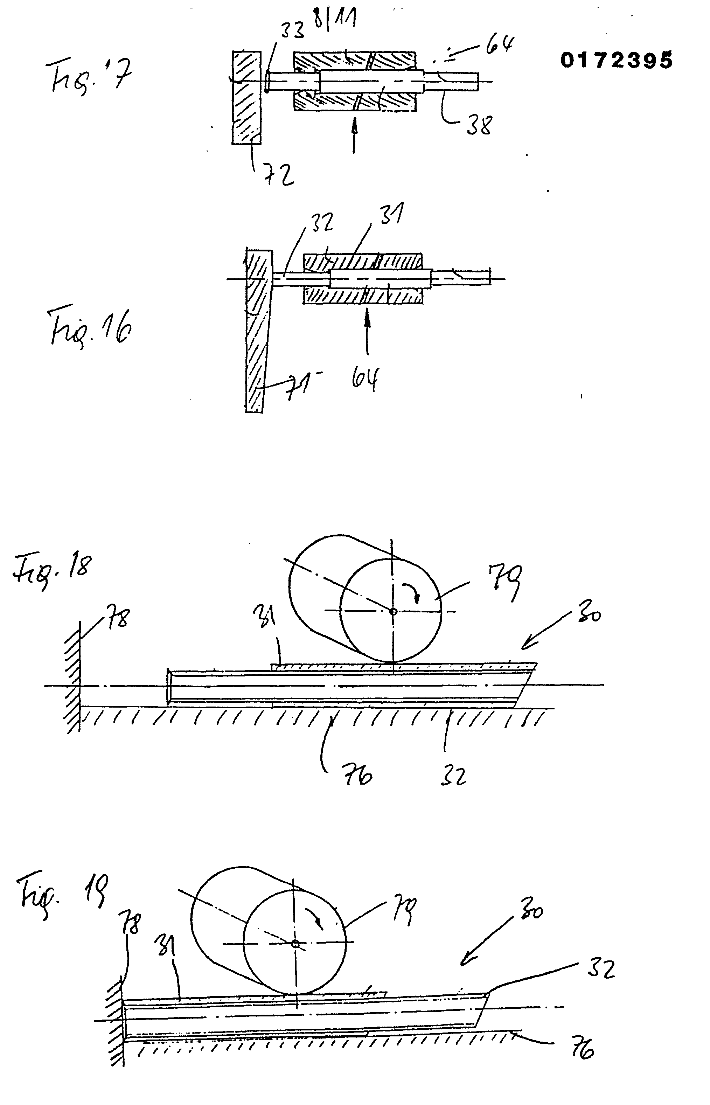

Die ineinander geschobenen (doppelt langen) Trinkhalmabschnitte 31 und 32 werden mit bzw. in den Fügehülsen 64 durch die Vereinigungstrommel 51 sodann einer Trennstation zugeführt, die am Außenumfang der Vereinigungstrommel 51 gebildet ist. In den Fig. 16 ff. sind Einzelheiten dargestellt. Zunächst wird die aus Außenhalm 31 und Innenhalm 32 bestehende Trinkhalmeinheit 38 durch ein feststehendes Leitblech 71 mit schräger Auflauffläche in Axialrichtung ausgerichtet, nämlich exakt positioniert (Fig. 16). Es folgt sodann eine Formstation (Fig. 17), in der an dem zugekehrten Ende des Innenhalms 32 die Randverdickung 33 angebracht wird. Hierzu wird das zugekehrte Ende des Innenhalms 32 mit (Strahlungs-)Wärme beaufschlagt, im vorliegenden Fall durch eine Heizplatte 72. Diese ist in der Formstation am Umfang der Vereinigungstrommel 51 ortsfest angebracht, und zwar derart, daß das Ende des Innenhalms 32 mit geringem Abstand an der Heizplatte 72 vorbeigeführt wird. Diese ist auf eine solche Temperatur aufgeheizt, daß durch Strahlung im Bereich des Endes des Innenhalms 32 eine Temperatur etwas oberhalb der Erweichungstemperatur des Materials des Innenhalms 32 erzeugt wird. Aufgrund dieser Temperaturverhältnisse und ohne mechanische Einwirkung erfolgt selbsttätig ein Aufweiten des Halmendes, derart, daß die beschriebene Randverdickung 33 entsteht.

In gleicher Weise wird mit dem gegenüberliegenden, anderen Ende des (doppelt langen) Innenhalms 32 verfahren, und zwar nach entsprechender Ausrichtung der Trinkhalmeinheit 38 in der entgegensetzten Richtung durch ein entsprechendes Leitblech 71 und unter Anwendung einer Heizplatte 72 entsprechend der bereits beschriebenen. Der Innenhalm 32 ist dadurch an beiden Enden mit einer Randverdickung 33 versehen.

Während weiterer Bewegung der Vereinigungstrommel 51 gelangen die Trinkhalmeinheiten 38 in ihren Fügehülsen 64 in den Bereich einer Trennstation, die als Einzelheit schematisch in Fig. 20 ff. gezeigt ist. Hier werden die Trinkhalmeinheiten 38 durch einen mittigen Schrägschnitt 73 in zwei komplette Trinkhalme 30 aufgeteilt (Fig. 23). Zu diesem Zweck kommt im Bereich der Trennstation ein schrägstehendes rotierendes Schneidmesser 74 zum Einsatz, welches in Fig. 20 lediglich schematisch dargestellt ist. Die Fügehülse 64 bzw. deren Seitenwandungen sind zu diesem Zweck mit einem entsprechend schrägliegenden Messerschlitz 75 ausgestattet, durch den das Schneidmesser 74 hindurchtritt.

Die soweit fertiggestellten, einzelnen Trinkhalme 30 werden nunmehr paarweise, nämlich entsprechend dem Inhalt eine Fügehülse 64, aus dieser durch schwenkbare Hubfinger 90 herausgehoben und an eine Formwalze 76 übergeben, die achsparallel derart relativ zur Vereinigungstrommel 51 angeordnet ist (Fig. 4), daß durch Radialbewegung der Trinkhalme 30 (Ausheben aus der Fügehülse 64) eine Übergabe an die Formwalze 76 erfolgt.

Diese ist längs ihres Umfangs ebenfalls mit achsparallelen Halmaufnahmen versehen, nämlich im wesentlichen U-förmigen Halmmulden 77, je zur Aufnahme von zwei gleichachsig liegenden Trinkhalmen 30. Die Übergabe der Trinkhalme 30 an die Formwalze 76 erfolgt etwa in Höhe einer horizontalen Mittelebene, wobei die Drehrichtung der Formwalze 76 so gewählt ist (Fig. 24), daß die Trinkhalme 30 bei weiterem Transport nicht in Radialrichtung aus den Halmmulden 77 austreten können. An den axialen Enden derselben sind Seitenscheiben 78 zum Verschluß der Halmmulden 77 an ihren Enden vorgesehen.

Die Trinkhalme 30 gelangen nach dem Eintritt in die Halmmulde 77 zunächst in eine Verschiebestation, die im vorliegenden Falle durch ortsfest am Außenumfang der Formwalze angeordnete Verschiebeorgane für die Trinkhalme 30 gebildet ist. Es handelt sich vorliegend um rotierend angetriebene Verschiebebürsten 79, von denen jeder Halmmulde 77 (im Bereich der Verschiebestation) zwei zugeordnet sind, nämlich je eine Verschiebebürste 79 für jeden Trinkhalm 30. Durch die in entsprechender Richtung umlaufenden Verschiebebürsten werden die Trinkhalme 30 zunächst durch jeweils eine erste Verschiebebürste 79 in eine Randposition verschoben, nämlich bis zur Anlage an den Endseitenscheiben.78. Wie aus Fig. 24 ersichtlich, sind in Umfangsrichtung aufeinander folgend drei Verschiebebürsten 79 vorgesehen. Nach der Verschiebung der Trinkhalme 30 bis zur Anlage an den Seitenscheiben 78 werden die Außenhalme 31 auf den Innenhalmen 32 ebenfalls nach außen verschoben bis zur Anlage an den Endseitenscheiben . Dies entspricht der Lager- bzw. Verpackungsstellung gemäß Fig. 1.

Die positionierten Trinkhalme 30 werden nunmehr durch die Formwalze 76 einer Formstation zugeführt, in der die Anschlagsicke 34 im Bereich des Außenhalms 31 eingeformt wird und - aufgrund der Relativstellung - zugleich auch die Haltesicke 37 des Innenhalms 32. Die entsprechende thermische Verformung von Außenhalm 31 und Innenhalm 32 erfolgt durch Drehen des Trinkhalms 30 um die eigene Längsachse relativ zu einem feststehenden bzw. ortsfesten Formwerkzeug in Gestalt eines entsprechend aufgeheizten Formsegments 80 je Trinkhalm 30. Zwei dieser Formsegmente sind demnach längs eines Teilkreises - etwa halber Umfang - an der Außenseite der Formwalze 76 angeordnet, im Bereich der vorgegebenen Position für die Sicken 34, 37. Eine den Trinkhalmen 30 zugekehrte, abgerundete Formkante 81 dringt während der Relativbewegung der Trinkhalme 30 in den Bereich derselben ein und drückt dadurch die insbesondere in Fig. 1 dargestellte Sicke in die Wandungen von Außenhalm und Innenhalm. Das Formsegment 80 wird in geeigneter Weise beheizt.

Die Drehbewegung der Trinkhalme 30 im Bereich der vorstehend beschriebenen Formstation innerhalb der Halmmulden 77 erfolgt bei dem vorliegenden Ausführungsbeispiel durch Abrollen auf einem Antriebsegment 82, an dem die betreffenden Trinkhalme 30 anliegen. Die zugekehrte Seite des Antriebsegments 82 ist mit einem Reibbelag versehen, der eine Drehung der Trinkhalme 30 infolge der Relativbewegung um die eigene Längsachse bewirkt.

Im unteren Bereich der Formwalze 76, nämlich nach Verlassen des durch das Formsegment 80 bestimmten Bereichs, fallen die nunmehr fertiggestellten Trinkhalme 30 paarweise nach unten aus den Halmmulden 77 heraus.

Alternativgestaltungen für die Trinkhalme 30 sind in Fig. 26 bis 28 im axialen Teil-Längsschnitt gezeigt.

Gemäß Fig. 26 dient eine im Innenhalm 32 angebrachte Haltesicke 83 in der ausgezogenen Stellung des Trinkhalms (analog zu Fig. 2) zum Verankern einer Randverdickung 84 am freien Ende des Außenhalms 31.

Gemäß Fig..27 ist der Innenhalm 32 ebenfalls mit einer Haltesicke 83 zum Eintritt einer Randverdickung 84 versehen. Darüber hinaus ist eine zweite Sicke, nämlich die Haltesicke 85 mit Abstand von der ersten Haltesicke 83 im Innenhalm 32 angebracht. Diese gewährt eine zweite Stellung des Außenhalms 31 entweder zu Transport- und Lagerzwecken oder zur Gewährleistung einer anderen, zweiten Ausziehstellung.

Fig. 28 zeigt eine Lösung, bei der Außen- und Innenhalm 31, 32 mit nach außen gerichteten Verformungen versehen sind. Der Innenhalm 32 ist hier mit zwei im Abstand voneinander angeordneten Ringwülsten 86 und 87 versehen, die nach außen gerichteten Sicken entsprechen. Hiermit in Eingriff gebracht wird ein Gegenwulst 88 am Ende des Außenhalms 31, ebenfalls wie eine Sicke ausgebildet. Der Gegenwulst 88 befindet sich im Bereich eines Konusstücks 89 des Außenhalms 31, also im Bereich eines konvergierend ausgebildeten Endstücks.

Die Trinkhalmabschnitte, also Außenhalm 31 und Innenhalm 32, bestehen bei den beschriebenen Ausführungsbeispielen zweckmäßigerweise aus unterschiedlichen Werkstoffen. Vorzugsweise besteht der Außenhalm 31 aus einem Copolymerisat, z. B. einem Polypropylen-Polyäthylen-Gemisch, und zwar insbesondere aus ästhetischen Gründen. Der Innenhalm 32 besteht demgegenüber zweckmäßigerweise aus einem Homo-Polymerisat, z. B. aus Polypropylen. Dieser Werkstoff ist besonders stabil.

Meissner & Bolte
Patentanwälte

# MEISSNER & BOLTE

PATENTANWÄLTE
EUROPEAN PATENT ATTORNEYS
BREMEN · MÜNCHEN*

**0172395**

-1-

MEISSNER & BOLTE, Hollerallee 73, D-2800 Bremen 1

Anmelder:

Overbeck & GmbH & Co.
Duckwitzstraße 39

2800 Bremen 1

Hans Meissner · Dipl.-Ing. (bis 1980)
Erich Bolte · Dipl.-Ing.
Dr. Eugen Popp · Dipl.-Wirtsch.-Ing.*
Wolf E. Sajda · Dipl.-Phys.*
Dr. Tam v. Bülow · Dipl.-Wirtsch.-Ing.*
Dr. Ulrich Hrabal · Dipl.-Chem.*

BÜRO/OFFICE BREMEN
Hollerallee 73
D-2800 Bremen 1

Telefon: (0421) 342019
Telegramme: PATMEIS Bremen
Telex: 246157 meibo d

Ihr Zeichen
Your ref

Unser Zeichen
Our ref.

OVE-34

Bitte angeben/please quote

Datum
Date 28. Juni 1985 / 9812

Längenveränderbarer Trinkhalm sowie Verfahren und
Vorrichtung zum Herstellen desselben

A n s p r ü c h e

1. Längenveränderbarer Trinkhalm mit mindestens zwei teleskopartig gegeneinander verschiebbaren Trinkhalmabschnitten, d a d u r c h   g e k e n n z e i c h n e t , daß die beiden Trinkhalmabschnitte (Außenhalm 31, Innenhalm 32) ineinandersteckbar sind und mindestens in einer Relativlage zueinander durch formschlüssigen Eingriff von radial gerichteten Vorsprüngen und Vertiefungen gegeneinander verriegelbar sind.

2. Trinkhalm nach Anspruch 1, dadurch gekennzeichnet, daß die formschlüssige Verriegelung der Trinkhalmabschnitte gegeneinander in beiden Axialrichtungen (zusammenschieben , auseinanderzeihen) wirksam ist.

3.    Trinkhalm nach Anspruch 1 oder 2, dadurch gekennzeichnet, daß der eine Trinkhalmabschnitt, insbesondere der Außenhalm (31), mindestens eine im Umfangsrichtung umlaufende, in das (thermisch) verformbare Material eingeformte Sicke (Anschlagsicke 34) und der andere Trinkhalmabschnitt, insbesondere der Innenhalm (32), mindestens einen mit der Sicke bzw. Anschlagsicke (34) in Eingriff bringbaren Gegenvorsprung (Randverdickung 33) aufweist.

4.    Trinkhalm nach einem der Ansprüche 1 bis 3, dadurch gekennzeichnet, daß die Anschlagsicke (34) des Außenhalms (31) nach innen geformt ist und die Randverdickung (33) als Querschnittserweiterung am Ende des Innenhalms (32) bei ausgezogenem Trinkhalm (30) an der Anschlagsicke (34) anliegt.

5.    Trinkhalm nach einem der Ansprüche 1 bis 4, dadurch gekennzeichnet, daß die Anschlagsicke (34) des Außenhalms (31) mit Abstand von einem Ende desselben und die Randverdickung (33) unmittelbar an einem Ende des Innenhalms (32) gebildet ist.

6.    Trinkhalm nach einem der Ansprüche 1 bis 5, dadurch gekennzeichnet, daß bei zusammengeschobenem Trinkhalm (30) (Verpackungs- bzw. Lagerposition) die Anschlagsicke (34) des Außenhalms (31) und eine Haltesicke (37) des Innenhalms (32) miteinander in Eingriff sind.

7.    Trinkhalm nach Anspruch 1 sowie einem der weiteren Ansprüche, dadurch gekennzeichnet, daß die Randverdickung (33) durch (thermisches ) Aufweiten des Innenhalms (32) gebildet ist.

8.    Trinkhalm nach Anspruch 1 sowie einem der weiteren Ansprüche, dadurch gekennzeichnet, daß der Innenhalms (32) deutlich länger bemessen ist als der Außenhalm (31).

9.     Trinkhalm nach Anspruch 1 sowie einem der weiteren Ansprüche, dadurch gekennzeichnet, daß Außenhalm (31) und Innenhalm (32) auf der einem Flüssigkeitsbehälter zugeordneten (unteren) Seite eine Abschrägung (35, 36) aufweisen.

10.     Trinkhalm nach Anspruch 1 sowie einem der weiteren Ansprüche, dadurch gekennzeichnet, daß der Außenhalm (31) und/oder der Innenhalm (32) an einem Ende konisch spitz zulaufend ausgebildet ist (Konusstück 89).

11.     Verfahren zum Herstellen von Teleskop-Trinkhalmen aus wenigstens zwei gegeneinander verschiebbaren Trinkhalmabschnitten (Innenhalm, Außenhalm), gekennzeichnet durch folgende Merkmale:

a)     Abtrennen von Trinkhalmabschnitten (Außenhalm 31, Innenhalm 32) von extrudierten Halmsträngen (42, 43),

b)     Zusammenfügen von Außenhalm und Innenhalm durch Ineinanderschieben in Axialrichtung,

c)     Warmverformen von Außenhalm und/oder Innenhalm zur Bildung von Sicken, Vorsprüngen, Vertiefungen bzw. Randverdickungen.

12.     Verfahren nach Anspruch 11, dadurch gekennzeichnet, daß die Trinkhalme (30) während des Einformens von Vorsprüngen, Vertiefungen etc. um die eigene Längsachse gedreht werden relativ zu einem Formwerkzeug.

13.     Verfahren nach Anspruch 11, dadurch gekennzeichnet, daß Trinkhalmeinheiten (38) aus mindestens Äußenhalm (31) und Innenhalm (32) von doppelter Länge hergestellt, zusammengefügt und sodann mittig durchtrennt werden zur Bildung von zwei Trinkhalmen (30).

14.     Verfahren nach Anspruch 11, dadurch gekennzeichnet, daß nach innen gerichtete Sicken (Anschlagsicke 34, Haltesicke 37..) durch Drehen des Trinkhalms (30) um die eigene Längsachse unter Anlage an einem (erwärmten) Formwerkzeug während des Transports relativ zum Formwerkzeug hergestellt werden.

15.    Verfahren nach Anspruch 11, dadurch gekennzeichnet, daß die Trinkhalmeinheiten (38) vor dem Einformen von Sicken (Anschlagsicke 34), insbesondere nach dem Anbringen von Randverdickungen (33) an dem (doppelt langen) Innenhalm (32) mittels Schrägschnitt durchtrennt werden.

16.    Verfahren nach Anspruch 15, dadurch gekennzeichnet, daß nach dem Durchtrennen der Trinkhalmeinheit (38) Außenhalm (31) und Innenhalm (32) des Trinkhalms (30) relativ zueinander verschoben werden zur Bildung einer Lager- bzw. Verpackungsposition, in der Außenhalm (31) und Innenhalm (32) an dem von den Abschrägungen (35, 36) abliegenden Ende bündig sind.

17.    Verfahren nach Anspruch 11, dadurch gekennzeichnet, daß die Randverdickung (33) durch Strahlungswärme mit Hilfe einer Heizplatte (72) berührungslos erzeugt werden.

18.    Vorrichtung zum Herstellen von Teleskop-Trinkhalmen aus wenigstens zwei ineinander angeordneten Trinkhalm-abschnitten (Außenhalm, Innenhalm), dadurch gekennzeich-net, daß die von gesonderten Halmsträngen (42, 43) abgetrennten Trinkhalmabschnitte (Außenhalm 31, Innenhalm 32) im Bereich einer Vereinigungstrommel 51 durch axiale Relativverschiebung zusammenfügbar sind.

19.    Vorrichtung nach Anspruch 18, dadurch gekennzeichnet, daß Außenhalm (31) einerseits und Innenhalm (32) andererseits in den Endbereichen dem Umfang der Vereinigungstrommel (51) zuführbar und in einem mittleren Vereinigungsbereich (54) mit Hilfe von Fügehülsen (64) zusammenschiebbar sind.

20.    Vorrichtung nach Anspruch 18, dadurch gekennzeichnet, daß den Trinkhalmabschnitten (Außenhalm 31, Innenhalm 32) im Bereich der Vereinigungstrommel (51) jeweils in Längsrichtung bewegbare Halmstößel (57, 58) zum Zusammenschieben der Trinkhalmabschnitte zugeordnet sind.

21.    Vorrichtung nach Anspruch 19, dadurch gekennzeichnet,daß die im Vereinigungsbereich  (54) auf der Vereinigungstrommel (51) angeordneten Fügehülsen (64) den Außenhalm (31) aufnehmen und fixieren und daß der Innenhalm (32) über eine Einlaufführung (68) in die Fügehülse (64) und damit in den Außenhalm (31) einschiebbar ist.

22.    Vorrichtung nach Anspruch 19, dadurch gekennzeichnet, daß die in der fügehülse (64) fixierte Trinkhalmeinheit (38) in dieser durch schräggerichtete Schneidmesser (74) längs eines Schrägschnitts (73) im Bereich eines Messerschlitzes (75) der Fügehülse (64) durchtrennbar ist.

23.    Vorrichtung nach Anspruch 19, dadurch gekennzeichnet,daß die aus der Fügehülse (64) herausragenden Enden des (doppelt langen) Innenhalms (32) durch Vorbeibewegen an einer Heizplatte (62) mit geringem Abstand thermisch aufweitbar sind unter Bildung der Randverdickungen (33).

24.    Vorrichtung nach Anspruch 19, dadurch gekennzeichnet, daß die beiden getrennten Trinkhalme (30) in Radialrichtung aus den Fügehülsen (64) der Vereinigungstrommel (61) heraushebbar und einer Formwalze (76) zuführbar sind, in deren Bereich Sicken (Anschlagsicke 34..) an den Trinkhalmen (30) anbringbar sind.

25.    Vorrichtung nach Anspruch 24, dadurch gekennzeichnet, daß die gleichachsig liegenden Trinkhalme (30) einer ursprünglichen Trinkhalmeinheit (38) in Halmmulden (77) der Formwalze (76) durch Schiebeorgane, insbesondere durch Verschiebebürsten (79) in Längsrichtung auseinanderbewegbar und zugleich die Außenhalme (31) auf den Innenhalmen (32) verschiebbar sind.

26.     Vorrichtung nach Anspruch 24, dadurch gekennzeichnet, daß die Trinkhalme (30) durch die Formwalze (76) an ein beheiztes Formsegment (80) vorbeibewegbar sind, dessen Formkante (81) Sicken durch Drehen der Trinkhalme (30) in diese einformt.

Meissner & Bolte
Patentanwälte

**Fig 1**

**Fig. 2**

Fig 3

0172395

Fig.6

Fig.5

4111

45

4,

46

31

Fig. 8

43

48

Fig. 7

47

46

49

45

50

31

Fig. 7

Fig. 9

Fig. 10

0172395

Fig 11

0172395

Fig. 12

66  64
32  68  65  75  37  62

Fig. 13

32  66  64  62
62  68  75  62

Fig. 14

64  37  38  32
32  62  75  64  69  37/32

Fig 15

Fig. 7

Fig. 16

Fig. 18

Fig. 19

0172395

0172395

Fig. 20

Fig. 21

A - A

Fig. 22

Fig. 23

0172395

Fig. 24

Fig 25

0172395

**Fig. 26**

**Fig. 27**

**Fig. 28**

Europäisches
Patentamt

**EUROPÄISCHER RECHERCHENBERICHT**

0172395

Nummer der Anmeldung

EP 85 10 8755

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X,P | EP-A-0 139 074 (SANYO SHIKI)<br><br>* Anspruch 2; Seite 2, Zeilen 16-19; Abbildung 9 *<br><br>--- | 1-5,8-10 | A 47 G 21/18<br>B 29 D 23/00 |
| X | US-A-2 269 593 (MALTBY)<br><br>* Anspruch 1; Seite 1, Spalte 2, Zeilen 23-29 *<br><br>--- | 11,17,20,23 | |
| A | US-A-2 985 077 (STRAHAMMER)<br><br>* Spalte 2, Zeilen 23-31; Spalte 3, Zeilen 48-55 *<br><br>--- | 12,14,24 | |
| A | DE-A-3 133 254 (HINTERKOPF)<br>* Seite 7, Zeilen 6-12; Abbildung 4 *<br><br>--- | 13,22 | RECHERCHIERTE SACHGEBIETE (Int. Cl 4) |
| A | US-A-4 171 943 (TSCHANZ)<br>* Anspruch 1 *<br><br>--- | 17,23 | A 47 G<br>B 65 D<br>B 29 C<br>B 29 D |
| A | US-A-3 336 654 (RYAN)<br>* Abbildung 4; Spalte 3, Zeilen 14-24 *<br><br>--- | 18,25 | |
| A | DE-U-1 912 368 (KÜSTER)<br><br>--- | | |
| A | FR-A-1 307 693 (YUEN)<br><br>--- -/- | | |

Der vorliegende Recherchenbericht wurde für alle Patentansprüche erstellt

| Recherchenort | Abschlußdatum der Recherche | Prüfer |
|---|---|---|
| DEN HAAG | 30-10-1985 | BEUGELING G.L.H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | US-A-3 493 998 (MUELLER) | | |
| | ----- | | |
| | | | RECHERCHIERTE SACHGEBIETE (Int Cl 4) |

Der vorliegende Recherchenbericht wurde für alle Patentansprüche erstellt

| Recherchenort DEN HAAG | Abschlußdatum der Recherche 30-10-1985 | Prüfer BEUGELING G.L.H. |
|---|---|---|